# EUROPEAN PATENT APPLICATION

(11) **EP 1 238 852 A2**
(43) Date of publication of application: **11.09.2002**
(21) Application number: 02251462.4
(22) Date of filing: 01.03.2002
(51) Int. Cl.: B60N 2/28

(54) **Upper tether for child safety seat**

(30) Priority: 07.03.2001 GB 0105554
(71) Applicant: Britax Child-Care Products Pty Ltd., Sunshine, Melbourne 3020 (AU); BRITAX RÖMER Kindersicherheit GmbH, D-89024 Ulm (DE)
(72) Inventor: Lumley, Michael Andrew, Torquay, Victoria 3228 (AU); Wetter, Hermann, 89075 Ulm (DE)
(74) Representative: Hollinghurst, Antony

(57) **Abstract**

An upper tether attachment system for a vehicle seat, comprises an auxiliary strap (20, 26) adapted to extend from an anchorage (18) on the vehicle behind the vehicle seat back (12), over the top of the vehicle seat back (12) to a coupler (28). In use, the coupler (28) is engaged by a tether strap connector (30). A U-shaped clip (34) engages round the upper edge of the seat back 12 and holds the coupler (28) in position on the seat back (12) prior to attachment of the tether strap connector (30).

## Description

This invention relates to an upper tether attachment system for a vehicle seat, comprising an auxiliary strap adapted to extend from an anchorage on the vehicle behind the vehicle seat back, over the top of the vehicle seat back to a coupler that is adapted for engagement by a tether strap connector of an upper tether for securing a child safety seat on a vehicle seat in a motor vehicle.

US-A-5630645 describes a tether of this type for use with a child safety seat adapted to be secured in a motor vehicle by the vehicle seat belt. The tether provides additional securing means for preventing forward movement in the vehicle of the upper part of the child seat.

It may be desired to use a child seat with an upper tether in a vehicle in which an anchorage for such a tether was not provided at the time of manufacture. However, the provision of such an anchorage in the required position can be difficult, particularly in respect of vehicles in which the backrest of the vehicle rear seat is arranged to fold forwards. Upper tether attachment systems of the type described above have been used to overcome this problem. When installing such a seat, it can be difficult to reach the end of the auxiliary strap from in front of the rear seat of the vehicle.

It is an object of the invention to provide an attachment system for an upper tether strap in a vehicle of this type, having a coupler that is readily accessible from in front of the rear seat of the vehicle.

According to the invention, an upper tether attachment system is provided with for holding the coupler in position on the seat back prior to attachment of the tether strap connector.

In one form of the invention, the mounting unit comprises a resilient U-shaped clip adapted to engage round the top edge of the seat back. Alternatively, if the vehicle seat is provided with a head restraint, the mounting means may comprise a clip adapted to engage with the head restraint.

In another form of the invention, in which the vehicle is equipped with standard anchorage units of the type described in EP-A-1059194, which are used to secure the lower part of the child seat in the vehicle, the mounting means may comprise a further strap adapted to extend from the connector down the front of the seat back and having a tongue on its end adapted to engage with the buckle of the vehicle seat belt.

Embodiments of the invention will now be described, by way of example, with reference to the accompanying drawings, in which:
Figure 1 is schematic side view of a vehicle seat equipped with a tether strap coupling arrangement in accordance with the first embodiment of the invention;
Figure 2 is a partial side view, similar to Figure 1, illustrating a second embodiment of the invention;
Figure 3 is a partial side view, similar to Figure 1, illustrating a third embodiment of the invention; and
Figure 4 is a partial side view, similar to Figure 1, illustrating a fourth embodiment of the invention.

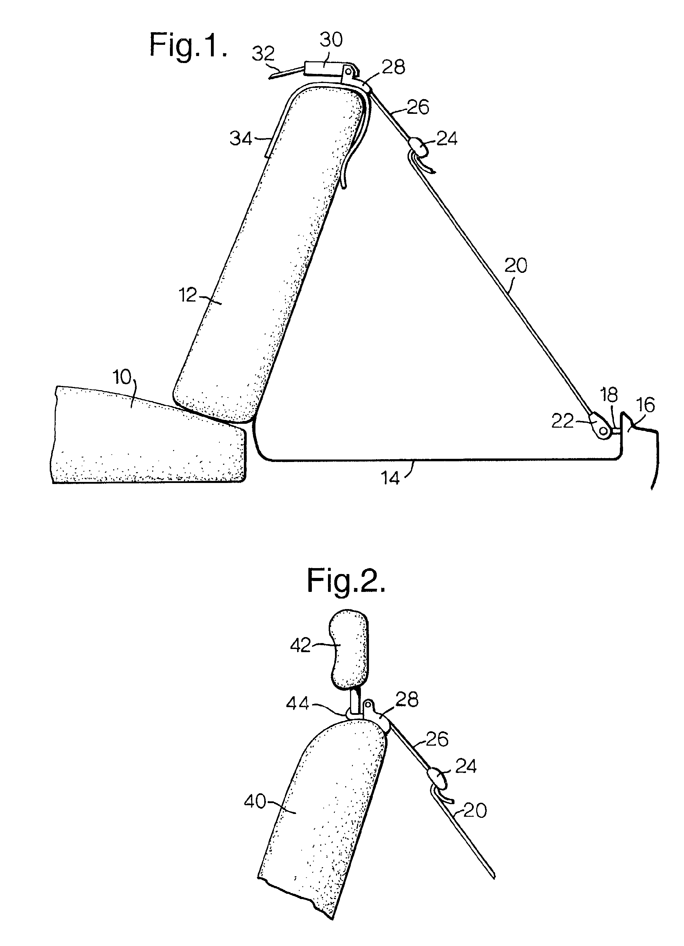

Figure 1 shows a vehicle rear seat having a seat cushion 10 and a seat back 12, behind which is the floor 14 of a motor car. Behind the floor 14 is the bottom part 16 of the frame surrounding the tailgate of the car. An anchorage 18 is rigidly mounted on this frame member.

An auxiliary strap 20 has one end coupled to this anchorage 18 by a releasable connector 22. The other end is attached to a strap adjuster 24 which may take the form of a 3-bar link. The adjuster 24 is connected by a short strap 26 to a coupler 28 comprising one part of an anchorage buckle, the other part 30 of which is secured to a tether strap 32 extending to the upper part of a child safety seat (not shown).

In accordance with the invention, the coupler 28 is mounted on a U-shaped clip 34 which is formed of resilient material and engages round the upper edge of the seat back 12. This holds the coupler 28 in position on the seat back 12 when the releasable part 30 is removed therefrom. Consequently, a child safety seat can be installed on the seat 10, 12 without the necessity of reaching as far back as the anchorage 18.

The connector 28, 30 may be as described in Canadian Patent Specification No. 1301435.

Figure 2 show an embodiment of the invention for use in a motor car in which the seat back 40 of the rear seat has a head restraint 42 for an adult passenger. The coupler 28 is secured to the head restraint 42 by a clip 44. Otherwise, this embodiment is as described with reference to Figure 1.

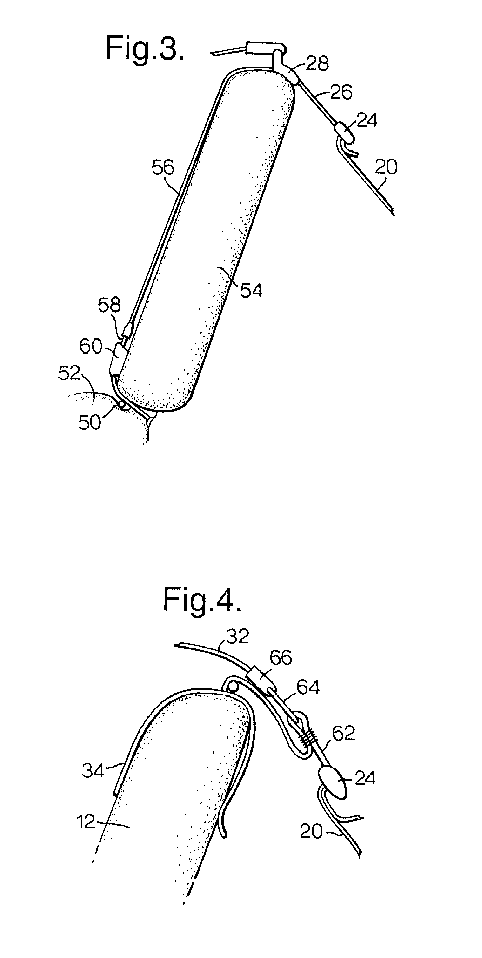

Figure 3 shows a third embodiment of the invention applied to a vehicle seat having standard anchorage units 50 of the type described in EP-A-1059194, which are located between the seat cushion 52 and the seat back 54. The coupler 28 of an arrangement as described in Figure 1 has a further strap 56 secured thereto. In use, the strap 56 extends down the front of the vehicle seat back 54 and carries a tongue 58 on its free end, which engages in a buckle 60 of a vehicle seat belt.

Alternatively, the coupler 28 may be secured to the top of the seat back of the vehicle seat by a touch-and-close fastener of the type sold under the registered trade mark VELCRO.

Figure 4 illustrates a modification of the embodiment shown in Figure 1, in which the short strap 26 and coupler 28 are replaced by a short strap 62 having a D-ring 64 sewn therein. One end of the strap 62 is attached to the adjuster 24 and the other to the U-shaped clip 34 on the seat back 12. In place of the connector part 30, a buckle 66 is attached to the tether strap 32 and is adapted to engage with the D-ring 64. This allows a longer tether strap 32 to be accommodated. A similar modification may be made to the embodiments shown in Figures 2 and 3.

The invention can also be used with child safety seats having two tether straps adapted to pass on opposite sides of the headrest of the vehicle seat. A completely separate assembly may be provided for each such tether strap. Alternatively, the two couplers may be connected by a Y-shaped strap assembly to a common anchorage.

## Claims

1. An upper tether attachment system for a vehicle seat, comprising an auxiliary strap (20, 26) adapted to extend from an anchorage (18) on the vehicle behind the vehicle seat back (12), over the top of the vehicle seat back (12) to a coupler (28) that is adapted for engagement by a tether strap connector (30), **characterised by** mounting means (34, 44, 56) for holding the coupler (28) in position on the seat back (12) prior to attachment of the tether strap connector (30).

2. An attachment system according to claim 1, wherein the mounting means comprises a resilient U-shaped clip (34) adapted to engage round the top edge of the seat back (12).

3. An attachment system according to claim 1, wherein the mounting means comprises a clip (44) adapted to engage with a head restraint for the vehicle seat.

4. An attachment system according to claim 1, wherein the mounting means comprises a further strap (56) adapted to extend from the connector down the front of the seat back (12) and having a tongue (58) on its end adapted to engage with a buckle (60) of a vehicle seat belt.

5. An attachment system according to claim 1, wherein the mounting means comprises a touch-and-close fastener having a first part secured to the tether strap (26) and a second part secured to the vehicle seat back (12).

6. An attachment system according to any preceding claim, wherein the coupler (28) is connected to the mounting means (34, 44, 56) by a flexible link (62).

7. An attachment system according to any preceding claim, wherein the auxiliary strap is formed in two parts (20, 26) interconnected by a strap adjuster (24).
